# EUROPEAN PATENT APPLICATION

(11) **EP 2 608 000 A1**
(43) Date of publication of application: **26.06.2013**
(21) Application number: 11195206.5
(22) Date of filing: 22.12.2011
(51) Int. Cl.: G06F 3/048, H04N 13/04

(54) **Method and apparatus pertaining to modification of a three-dimensional presentation of a user-interaction opportunity**

(71) Applicant: Research In Motion Limited, Waterloo, ON N2L 3W8 (CA)
(72) Inventor: Haliburton, James George, Redwood City, CA 94065 (US); Gardenfors, Dan Zacharias, 211 40 Malmo (SE)
(74) Representative: Greenaway, Martin William

(57) **Abstract**

A control circuit provides a three-dimensional presentation of one or more user-interaction opportunities and then detects a user's likely interaction with that user-interaction opportunity. Upon detecting this likely interaction the control circuit automatically flattens the user-interaction opportunity to facilitate the user's interaction with the user-interaction opportunity.

## Description

### Field of Technology

The present disclosure relates to electronic devices, including but not limited to portable electronic devices having touch-sensitive displays and their control.

### Background

Electronic devices, including portable electronic devices, have gained widespread use and may provide a variety of functions including, for example, telephonic, electronic messaging, and other personal information manager (PIM) application functions. Portable electronic devices include, for example, several types of stations such as simple cellular telephones, smart telephones, wireless personal digital assistants (PDAs), and laptop computers with wireless 802.1 1-compliant or Bluetooth-compliant capabilities.

Portable electronic devices such as PDA's or smart telephones are generally intended for handheld use and ease of portability. Many such devices include a touch-sensitive display, also known as a touch-screen display. The information displayed on the touch-sensitive displays may be modified depending on the functions and operations being performed. Increasingly, touch-screen displays are able to provide a viewer with a three-dimensional presentation of the displayed content.

### Brief Description of the Drawings

FIG. 1 is a block diagram in accordance with the disclosure.
FIG. 2 is a flow diagram in accordance with the disclosure.
FIG. 3 is a perspective view in accordance with the disclosure.
FIG. 4 is a side-elevational view in accordance with the disclosure.
FIG. 5 is a side-elevational view in accordance with the disclosure.
FIG. 6 is a side-elevational view in accordance with the disclosure.
FIG. 7 is a perspective view in accordance with the disclosure.
FIG. 8 is a side-elevational view in accordance with the disclosure.
FIG. 9 is a block diagram view in accordance with the disclosure.

### Detailed Description

The following describes an apparatus and method pertaining to selectively and dynamically modifying a three-dimensional presentation of at least one user-interaction opportunity. Generally speaking, these teachings provide such a presentation and then detect a user's imminent interaction with that user-interaction opportunity. Upon detecting this imminent interaction these teachings then provide for automatically flattening the user-interaction opportunity to facilitate the user's interaction with the user-interaction opportunity.

A touch-screen display can serve in these regards. The applicants have determined that when a user interacts with a stereoscopic user interface via a touchscreen and tries to touch an object that is not rendered on the zero plane (i.e., on the surface of the screen), the actual pixels representing this object can be different than the user's perceived image of the object. The pixels of objects behind or in front of the zero plane are "smeared" over the touch screen surface since the pixels viewed by the user's right eye are (partially or entirely) different than those viewed by the user's left eye. As a result, touch-based input in stereoscopic user interfaces is often confusing to the user and can be difficult for the system to interpret what object the user actually is trying to touch. Flattening the presentation as per the foregoing reduces ambiguity for the user (by, at least in part, synchronizing tactile feedback with the triggered visual action) and reduces ambiguity for the system when objects otherwise might overlap (for example, when left-side pixels of object A overlap with right-side pixels of object B).

In this case, flattening the user-interaction opportunity can include causing a representation of the user-interaction opportunity to coincide in space with an actual user-responsive touch-sensitive surface that corresponds to that particular user-interaction opportunity. So configured, ambiguity regarding which user-interaction opportunity the user selects can be greatly mitigated or even fully avoided.

A sensor of choice can aid in detecting the user's aforementioned imminent interaction with the user-interaction opportunity. Choices in these regards include, for example, one or more cameras and/or proximity sensors.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

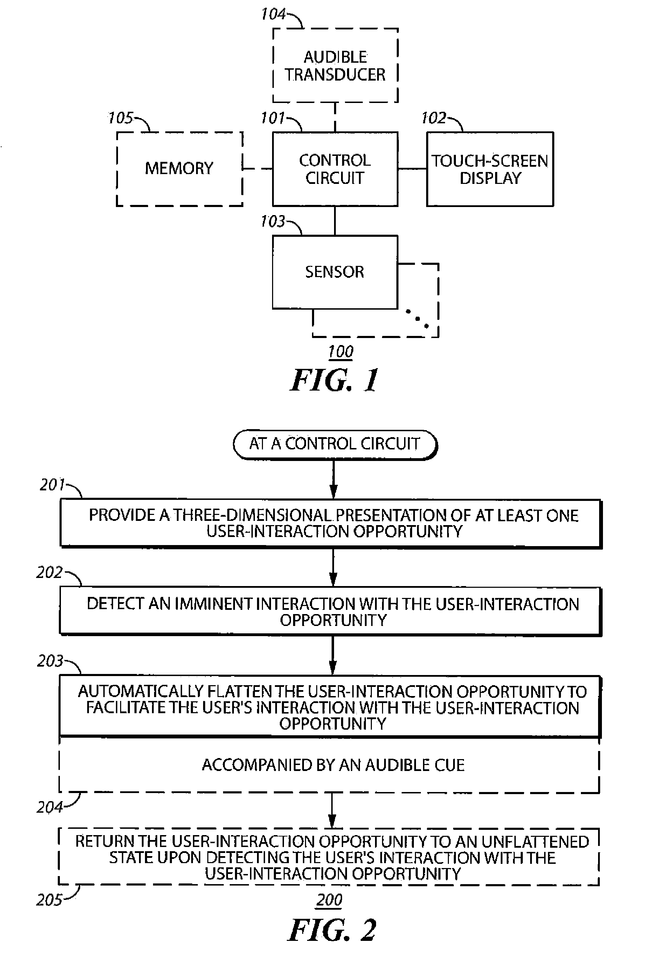

FIG. 1 provides an illustrative example of an enabling apparatus 100, such as a portable electronic device, configured to implement the methods of the present disclosure. In this example, the enabling apparatus 100 includes a control circuit 101 that operably couples to a touch-screen display 102 that is able to three-dimensionally present visual content. The control circuit is also operably coupled to one or more sensors 103. The sensor(s) 103 serves to facilitate detecting when a user of the apparatus 100 is likely to interact (e.g., the user interaction is imminent) with a user-interaction opportunity being presented via the touch-screen display 102.

Various sensors can serve in these regards as desired. By one approach, this sensor 103 can comprise one or more cameras or other image-capture devices. In lieu of the foregoing or in combination therewith, the sensor 103 can comprise one or more proximity sensors. Various proximity sensors are known in the art and include, for example, sensors that are based upon detecting ambient capacitive changes, ambient inductive changes, and so forth. The sensor(s) 103 is capable of detecting when a user's hand, finger, or other object is about to touch the display prior to the actual touching.

If desired, such an apparatus 100 can further include one or more audible transducers 104 that also operably couple to the control circuit 101. Such an audible transducer 104 can serve, for example, as described further herein.

The control circuit 101 can comprise a dedicated-purpose platform or can comprise a partially or wholly-programmable platform (such as a programmable processor), as desired. When at least partially programmable, the apparatus 100 can further comprise, if desired, a memory 105 that operably couples to the control circuit 101. This memory 105 can comprise, for example, a non-transitory computer storage medium having computer instructions stored therein. These computer instructions, in turn, when executed by the control circuit 101 can cause the latter to carry out one or more of the actions and/or functions described herein as desired. (As used herein, the expression non-transitory will be understood to refer to the non-ephemeral nature of the storage medium itself rather than to a notion of how long the stored information itself may persist in a stored state. Accordingly, memories that might otherwise be viewed, for example, as being volatile (such as many electronically-erasable programmable read-only memories (EPROM's) or random-access memories (RAM's)) are nevertheless to be viewed here as being "non-transitory" whereas a signal (such as a radio-frequency carrier or an optical-frequency carrier) in transit is to be considered "transitory" notwithstanding that the signal may remain in transit for a lengthy or even indeterminate period of time.)

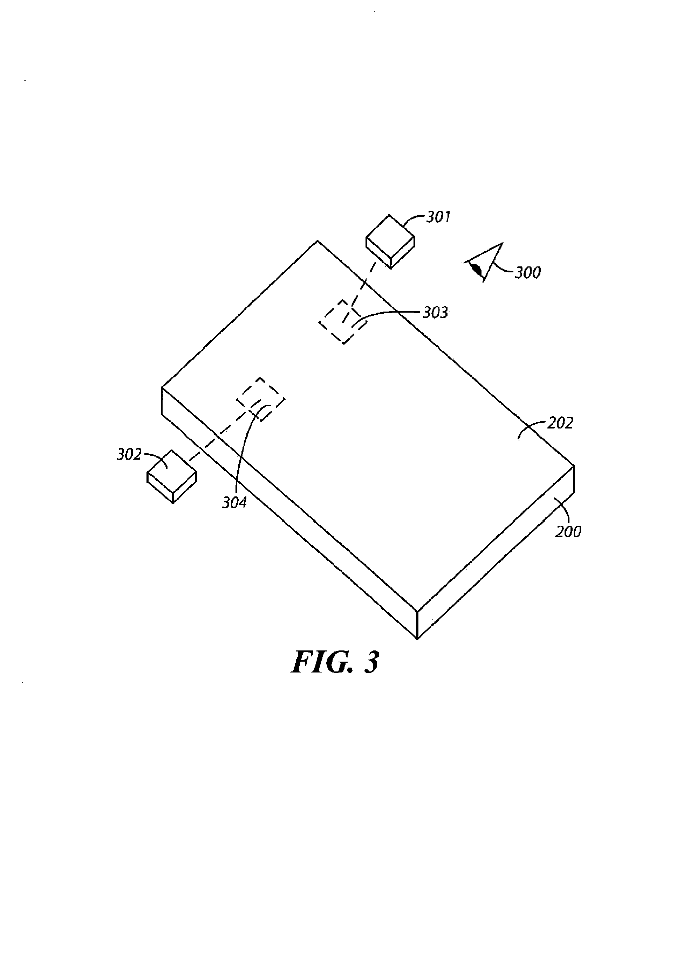

Referring to FIG. 2, the control circuit of choice provides 201 a three-dimensional presentation of at least one user-interaction opportunity. With reference to FIG. 3, this three-dimensional presentation can comprise, for example, a stereoscopic perception of three-dimensional depth for a viewer 300. It will be understood that a three-dimensional presentation may, by one approach, utilize dual two-dimensionally displayed images (one for each eye of the viewer 300) to create a virtual three-dimensional image. The generation of a virtual three-dimensional image or icon using a three-dimensional display may be referred to as "presenting" the image because the image may be perceived by the viewer 300 to appear at various distances from the viewer without regard to the physical location of the three-dimensional display apparatus.

In the specific illustrative example of FIG. 3, this three-dimensional presentation includes a first user-interaction opportunity 301 and a second user-interaction opportunity 302 that appear, to the viewer 300, to be located some distance above the surface of the touch-screen display 102 of the apparatus 100. These user-interaction opportunities can assume any of a wide variety of form factors. Here, these user-interaction opportunities are portrayed as simple user-selectable buttons.

As user-interaction opportunities, these buttons each correspond to a portion of the touch-screen display 102. In particular, the first user-interaction opportunity 301 corresponds to a first touch-screen area 303 and the second user-interaction opportunity 302 corresponds to a second touch-screen area 304 that is physically separate from the first touch-screen area 303. To interact with one of these user-interaction opportunities 301 or 302 the user must touch the touch-screen display 102 at the location that corresponds to the user-interaction opportunity being selected.

Depending upon the viewing angle and/or the design display, the appropriate location of the on-screen portion that corresponds to a desired user-interaction opportunity may or may not be obvious or intuitive to the viewer 300. Referring to FIG. 2 and FIGS. 4-7 the described process 200 provides for detecting 202 a user's imminent interaction with a given user-interaction opportunity (such as the first user-interaction opportunity 301) or that the user's hand, finger or other object is proximate to or within a given distance from the touch-screen display 102. In response to this detection, the user-interaction opportunity is automatically flattened 203 to facilitate the user's interaction with the user-interaction opportunity.

As used herein, the expression "flatten" will be understood to refer to reducing the three-dimensional depth accorded to a given visual element. This includes reducing the depth to some degree while nevertheless still maintaining some three dimensionality. This can also include fully reducing the depth such that the presentation is fully two dimensional and without any three-dimensional depth (and hence, "flat").

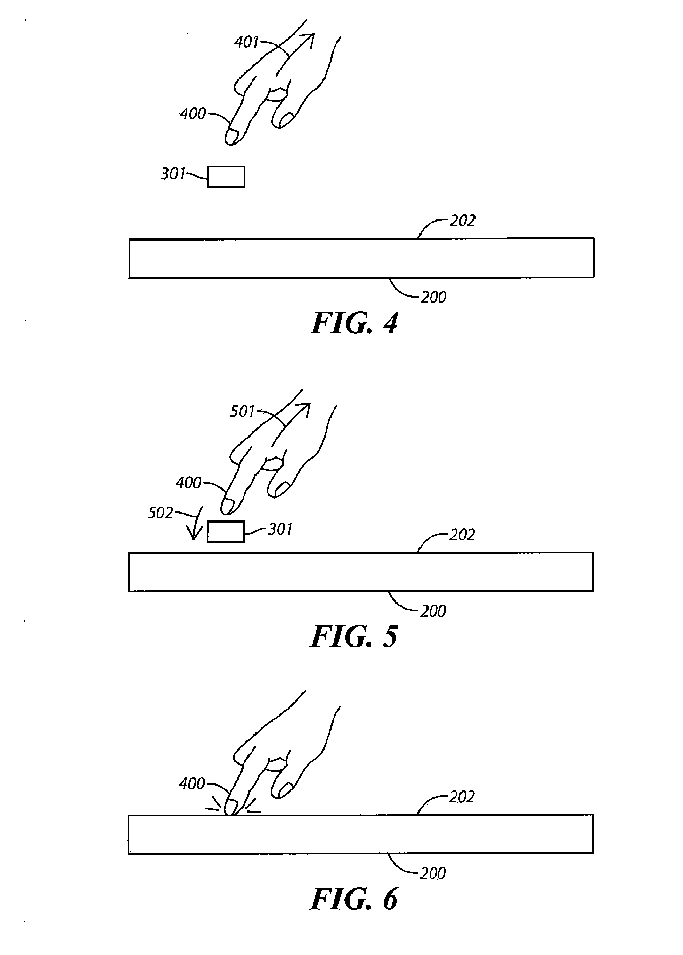

For example, and as shown in FIG. 4, as the user's finger 400 approaches 401 the first user-interaction opportunity 301 (which appears, to the viewer, to be at a location and depth that is above the surface of the touch-screen display 102), this growing proximity can be detected using one or more sensors of choice. In response, the three-dimensional presentation of the first user-interaction opportunity 301 begins to flatten 502 as illustrated in FIG. 5. As the user's finger 400 continues to move 501 towards the first user-interaction opportunity 301, this flattening can continue.

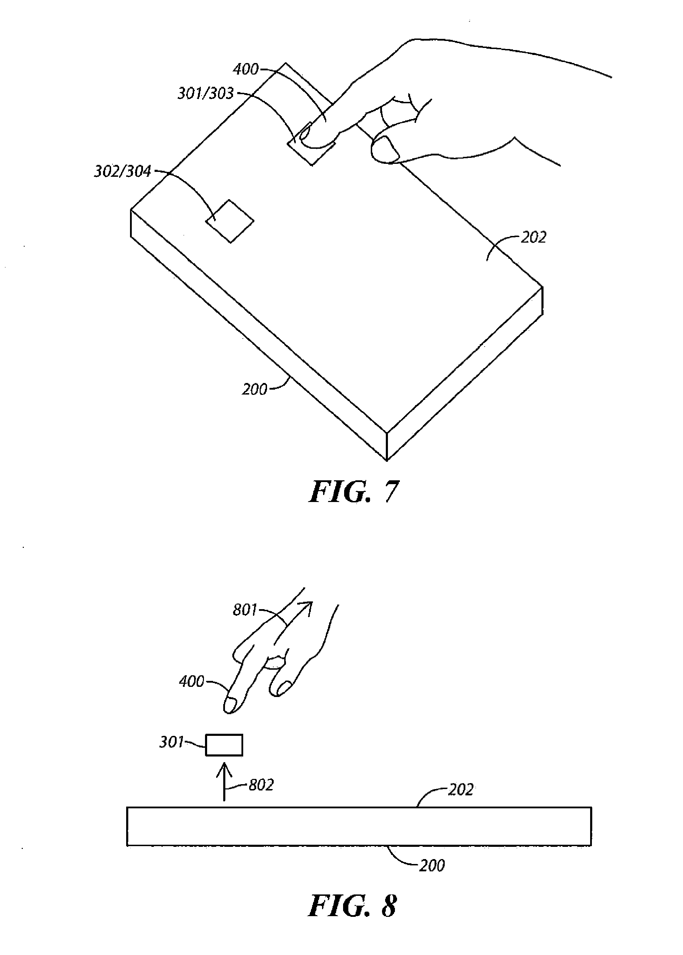

By one approach, the user-interaction opportunity flattens such that the visual representation of the opportunity coincides, in whole or in part, with that portion of the touch-screen display 102 that corresponds to that opportunity. Accordingly, as shown in both FIGS. 6 and 7, the user's finger 400 will eventually contact the surface of the touch-screen display 102 at the correct location to interact with the corresponding user-interaction opportunity.

So configured, a user can easily and intuitively successfully interact with a three-dimensional presentation of one or more user-interaction opportunities notwithstanding that some initial ambiguity may exist regarding where, exactly, the user should place their finger on the touch-screen display 102 to effect a desired action.

By one approach, all visual components of the three-dimensional presentation can flatten (at identical or differing rates, as desired) as the user-interaction opportunity that the user selects flattens. Using this approach, and as illustrated in FIG. 7, the aforementioned second user-interaction opportunity 302 will flatten along with the first user-interaction opportunity 301. By another approach, these teachings will accommodate only flattening a user-interaction opportunity that is presently seemingly selected by the user for interaction.

As described, the flattening is a smooth flattening that comprises a smooth visual transition of the depicted component from a fully-three dimensional state to a reduced or fully-two dimensional state. This means that the transition from one state to another proceeds without substantial discontinuities with respect to the presentation from one moment to the next. As a simple illustrative metaphor in these regards, flipping a light switch to switch a light source from an "on" state to an "off" state would be an unsmooth transition whereas using a dimmer switch to gradually change from the "on" state to the "off" state without a significant step-change in lighting from one moment to the next would be a smooth transition. If desired, however, these teachings will accommodate other practices in these regards. For example, upon detecting the user's imminent interaction with a user-interaction opportunity, the aforementioned presentation can move to the flattened state as a step function.

As another example of the flexibility of these teachings, by one approach the depiction of the user-interaction opportunity can move to the flattened location via a straight line. If desired, however, movement paths having other shapes can be employed, such as arcs, spirals, and so forth.

As noted above when reviewing FIG. 1, the control circuit 100 may have access to an audible transducer 104 of choice. In such a case, the described process 200 can include the optional activity of automatically using 204 an audible cue to accompany the aforementioned flattening 203 of the presentation of the user-interaction opportunity. Such an audible cue can serve, for example, to help (directly or indirectly) to infer that flattening. The specific content of the audible cue can of course vary widely as desired and as a function of the respective opportunities or limitations of a given application setting. Examples include but are not limited to musical content, sound effects, verbalized content, and so forth.

This process 200 will also accommodate the optional activity of automatically returning 205 the user-interaction opportunity to an unflattened state upon detecting that the user's interaction with the touch-screen display 102 has concluded. As one illustrative example in these regards, and as illustrated in FIG. 8, this can comprise detecting that the user is moving 801 their finger 400 away from the user-interaction opportunity 301 and responsively unflattening the presentation of the user-interaction opportunity 301 by increasing the three-dimensional visual depth 802 thereof.

By one approach such a response can occur more-or-less in real time, such that as the finger 400 moves back from the touch-screen display 102, so too moves the user-interaction opportunity until the latter reaches its fully unflattened state. By another approach, this unflattening response can occur only after some period of time passes (such as one second, two seconds, or the like) if desired. This approach can permit the user to make subsequent selections of the same, or other, flattened user-interaction opportunities without moving the presentation back and forth between flattened and unflattened states.

By one approach the aforementioned enabling apparatus 100 comprises a portable electronic device. Examples of portable electronic devices include mobile (i.e., vehicle mounted) or handheld wireless communication devices such as pagers, cellular phones, cellular smart-phones, wireless organizers, personal digital assistants, wirelessly enabled notebook computers, tablet computers, and so forth. The portable electronic device may also be a portable electronic device without wireless communication capabilities, such as a handheld electronic game device, digital photograph album, digital camera, or other device.

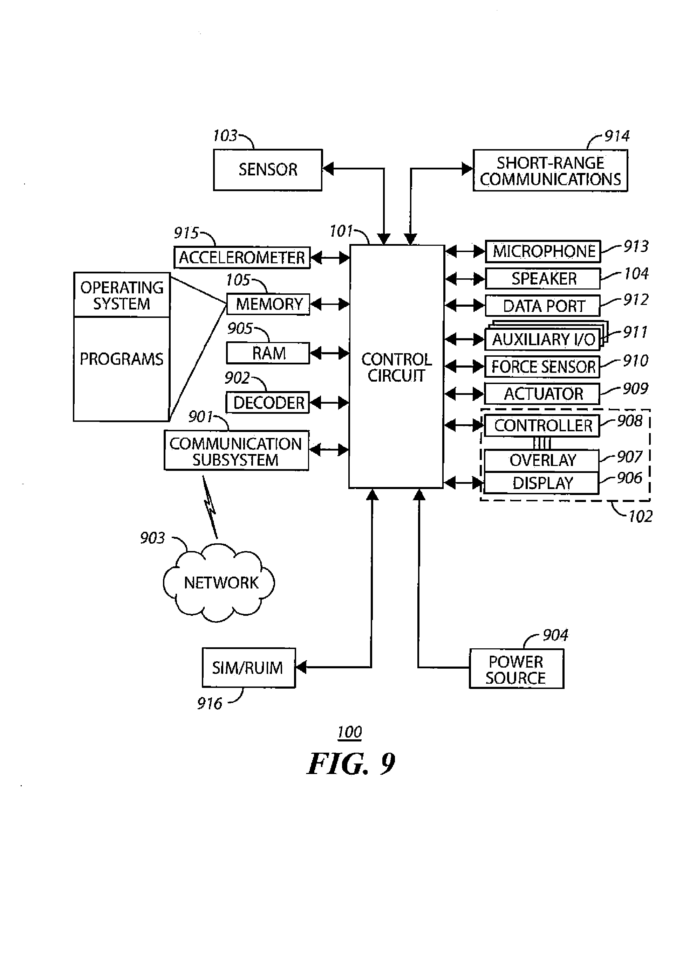

A block diagram of an example of a portable electronic device is shown in FIG. 9. The portable electronic device includes multiple components, such as a control circuit 101, a touch-screen display 102 (shown here to include a display 906 and a touch-sensitive overlay 907 that operably couple to an electronic controller 908), a sensor 103, an audible transducer 104 (represented here as a speaker), and a memory 105. The control circuit 101 controls the overall operation of the portable electronic device.

Communication functions, including data and voice communications, are performed through a communication subsystem 901. Data received by the portable electronic device is decompressed and decrypted by a decoder 902. The communication subsystem 901 receives messages from and sends messages to a wireless network 903. The wireless network 901 may be any type of wireless network, including, but not limited to, data wireless networks, voice wireless networks, and networks that support both voice and data communications.

A power source 904, such as one or more rechargeable batteries or a port to an external power supply, powers the portable electronic device. The control circuit 101 interacts with other components, such as a Random Access Memory (RAM) 905, one or more actuators 909, one or more force sensors 910, an auxiliary input/output (I/O) subsystem 911, a data port 912, a microphone 913, and short-range communications 914. The control circuit 101 may also interact with an accelerometer 915 to detect the direction of gravitational forces or gravity-induced reaction forces that act upon the apparatus 100.

To identify a subscriber for network access, the portable electronic device uses a Subscriber Identity Module or a Removable User Identity Module (SIM/RUIM) card 916 for communication with a network, such as the wireless network 903. Alternatively, user identification information may be programmed into the memory 105.

This memory 105 also stores an operating system and software programs or components that are executed by the control circuit 101. Additional applications or programs may be loaded onto the portable electronic device through the wireless network 903, the auxiliary I/O subsystem 911, the data port 912, the short-range communications subsystem 914, or any other suitable subsystem that may be available.

The touch-sensitive display 102 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 907. The overlay 907 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 102. The control circuit 101 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 102. For example, the x location component may be determined by a signal generated from one touch sensor, and the y location component may be determined by a signal generated from another touch sensor. A signal is provided to the controller 908 in response to detection of a touch.

A touch may be detected from any suitable contact member, such as a finger, thumb, appendage, or other objects, for example, a stylus, pen, or other pointer, depending on the nature of the touch-sensitive display 102. Accordingly it will be understood that the present teachings will also readily accommodate detecting 202 a user's imminent interaction with the user-interaction opportunity by detecting proximity of any suitable object that can serve in these regards.

The actuator(s) 909 may be depressed or activated by applying sufficient force to the touch-sensitive display 102 to overcome the actuation force of the actuator 909. The actuator(s) 909 may be actuated by pressing anywhere on the touch-sensitive display 102. The actuator(s) 909 may provide input to the control circuit 101 when actuated. Actuation of the actuator(s) 909 may result in provision of tactile feedback.

When force is applied, the touch-sensitive display 102 may be depressible, pivotable, and/or movable. Such a force may actuate the actuator(s) 909. The touch-sensitive display 102 may, for example, float with respect to the housing of the portable electronic device, i.e., the touch-sensitive display 102 may not be fastened to the housing. A mechanical dome switch actuator may be utilized. In this example, tactile feedback is provided when the dome collapses due to imparted force and when the dome returns to the rest position after release of the switch. Alternatively, the actuator 909 may comprise one or more piezoelectric (piezo) devices that provide tactile feedback for the touch-sensitive display 102.

Optional force sensors 910 may be disposed in conjunction with the touch-sensitive display 102 to determine or react to forces applied to the touch-sensitive display 102. The force sensor 910 may be disposed in line with a piezo actuator 909. The force sensors 910 may be force-sensitive resistors, strain gauges, piezoelectric or piezoresistive devices, pressure sensors, quantum tunneling composites, force-sensitive switches, or other suitable devices.

Whether embodied in a small, handheld, portable device or in a device having a larger form factor, these teachings permit a user to utilize and enjoy the benefits of a three-dimensional presentation of visual content while nevertheless retaining a simple, intuitive, and responsive ability to reliably select and interact with a particular user-interface opportunity via a touch-screen display. These teachings are highly scalable and will provide useful results in a wide variety of devices having varying functionality, sizes, and form factors. These teachings can also be economically implemented.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
displaying (201) a three-dimensional presentation of at least one user-interaction opportunity;
detecting (202) an imminent interaction with the user-interaction opportunity; and
automatically flattening (203) the three-dimensional presentation to facilitate interaction with the user-interaction opportunity.

2. The method of claim 1 wherein displaying the three-dimensional presentation of the at least one user-interaction opportunity comprises displaying the three-dimensional presentation on a touch-screen display.

3. The method of claim 1 wherein the three-dimensional presentation of the at least one user-interaction opportunity is perceivable as being at least one of above and behind a touch-screen display.

4. The method of claim 1 wherein the imminent interaction is detected by use of at least one of a camera and a proximity sensor.

5. The method of claim 1 wherein automatically flattening the user-interaction opportunity comprises smoothly flattening the user-interaction opportunity.

6. The method of claim 1 wherein automatically flattening the user-interaction opportunity comprises automatically flattening only with a portion of the three-dimensional presentation.

7. The method of claim 1 wherein automatically flattening the user-interaction opportunity comprises flattening all contents of the three-dimensional presentation.

8. The method of claim 1 further comprising:
automatically using an audible cue to accompany automatically flattening the user-interaction opportunity to facilitate interaction with the user-interaction opportunity.

9. The method of claim 1 further comprising:
automatically returning the user-interaction opportunity to an unflattened state upon detecting that the interaction with the user-interaction opportunity has concluded.

10. An apparatus (100) comprising:
a touch-screen display (102);
a sensor (103); and
a control circuit (101) operably coupled to the touch-screen display and the sensor, the control circuit configurable to:
use the touch-screen display to display (201) a three-dimensional presentation of at least one user-interaction opportunity;
use the sensor to detect (202) an imminent interaction with the user-interaction opportunity; and
automatically flatten (203) the user-interaction opportunity to facilitate interaction with the user-interaction opportunity via the touch-screen display.

11. The apparatus of claim 10 wherein the apparatus comprises a portable device.

12. The apparatus of claim 11 wherein the portable device comprises a portable wireless communications device.

13. The apparatus of claim 10 wherein the sensor comprises at least one of:
a camera; and
a proximity sensor.

14. The apparatus of claim 10 wherein the control circuit is configured to automatically flatten the user-interaction opportunity by smoothly flattening the user-interaction opportunity.

15. The apparatus of claim 10 further comprising:
an audible transducer operably coupled to the control circuit, wherein the control circuit is further configurable to automatically use the audible transducer to provide an audible cue to accompany automatically flattening the user-interaction opportunity.
